# EUROPÄISCHE PATENTANMELDUNG

(11) **EP 3 618 208 A1**
(43) Veröffentlichungstag der Anmeldung: **04.03.2020**
(21) Anmeldenummer: 18191427.6
(22) Anmeldetag: 29.08.2018
(51) Int. Cl.: H02G 3/06, H02G 3/04

(54) **VORRICHTUNG ZUM VERBINDEN VON KABELBAHNABSCHNITTEN UND KABELBAHN**

(71) Anmelder: Zurecon AG, 9053 Teufen AR (CH)
(72) Erfinder: PFLUGER, Gerd, 4625 Oberbuchsiten (CH)
(74) Vertreter: Rutz & Partner

(57) **Zusammenfassung**

Die Vorrichtung (2) dient zum mechanischen Verbinden und zum elektrischen Kontaktieren benachbarter erster und zweiter Kabelbahnabschnitte (1A, 1B), die je wenigstens ein erstes bzw. zweites Bodenelement (12) und beidseits daran anschliessende mit Wandöffnungen (111) versehene erste bzw. zweite Seitenwände (11A, 11B) umfassen und die nach deren Verbindung koaxial zu einer gemeinsamen Bahnachse (x) ausgerichtet eine Kabelbahn (1) bilden. Die Vorrichtung (2) umfasst ein mit ersten Haken (218) versehenes erstes Verbindungsteil (21) und ein mit zweiten Haken (228) versehenes zweites Verbindungsteil (22), die miteinander koppelbar und mit den gegeneinander gerichteten ersten und zweiten Haken (218; 228) in Wandöffnungen (111) benachbarter erster und zweiter Seitenwände (11A, 11B) einsetzbar sind. Erfindungsgemäss umfasst das erste Verbindungsteil (21) ein mit den ersten Haken (218) versehenes Haltesegment (21H) und ein Kopplungssegment (21K), das mittels einer Gewindestange (3) mit dem zweiten Verbindungsteil (22) verschiebbar und arretierbar verbunden ist, wobei die Gewindestange (3) entweder in das erste Verbindungsteil (21) eingesetzt und durch eine zumindest annähernd parallel zur Bahnachse (x) verlaufende Längsöffnung (221) im zweiten Verbindungsteil (22) hindurch geführt oder in das zweite Verbindungsteil (22) eingesetzt und durch eine zumindest annähernd parallel zur Bahnachse (x) verlaufende Längsöffnung (211) im ersten Verbindungsteil (21) hindurch geführt ist.

## Beschreibung

Die Erfindung betrifft eine Vorrichtung zum Verbinden von Kabelbahnabschnitten und eine mit solchen Vorrichtungen versehene Kabelbahn.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität oft in metallene Kabelbahnen, wie Kabelkanäle oder Kabelpritschen, eingelegt und so z.B. von einem Schaltfeld oder einer Zentrale zu den Verbrauchern geführt. Kabelbahnen dieser Art, die aus einzelnen Kabelbahnabschnitten zusammengesetzt werden, sind z.B. aus dem [1] Produktkatalog der LANZ OENSINGEN AG, Juli 2017, bekannt. Zur Verbindung der Kabelbahnabschnitte sind Vorrichtungen verwendbar, die ebenfalls in diesem Produktekatalog beschrieben sind.

Aus [2], EP1049226A2, ist eine Verbindungsvorrichtung bekannt, mittels der stirnseitig aneinander anstossende und mit Wandöffnungen versehene Seitenwände benachbarter Kabelbahnabschnitte miteinander verbindbar sind. Die Verbindungsvorrichtung umfasst Verbindungsplatten, die an der Unterseite mit Haken versehen sind. Zur Installation der Verbindungsplatten an den Aussenseiten der Seitenwände werden die Haken von oben in die Wandöffnungen eingeführt und nach unten gegen den Boden des Kabelkanals geschoben. In der Folge werden die Verbindungsplatten anhand eines Sicherungsmittels fixiert, das drehbar oder verschiebbar mit der Verbindungsplatte verbunden ist und in den Abschlussrand der Seitenwand eingehängt wird. Mit dem Sicherungsmittel werden somit Gelenk-, Scharnier- oder Schieberfunktionen realisiert, weshalb feingliederige Vorrichtungsteile erforderlich sind, die erheblichen Belastungen standhalten müssen. Da für die Arretierung der Verbindungsvorrichtung ein Zusammenwirken mit der Seitenwand erforderlich ist, ist diese Verbindungsvorrichtung nicht universell einsetzbar.

Zu beachten ist ferner, dass Krafteinwirkungen auf die Kabelbahn, insbesondere Schwingungen in vertikaler Richtung, zumindest teilweise durch die Sicherungsmittel aufgefangen werden müssen, um zu verhindern, dass die Verbindungsplatten in vertikaler Richtung nach oben geschoben werden und die Haken sich aus den Wandöffnungen lösen. Auf die Sicherungsmittel können daher grössere Kräfte einwirken, weshalb diese robust auszugestalten sind, damit keine Fehlfunktionen auftreten. Diese Verbindungsvorrichtung ist daher relativ aufwendig ausgestaltet und mit entsprechendem Aufwand zu bedienen.

Ferner ist zu beachten, dass der Abstand der letzten Wandöffnungen der einander zugewandten Kabelbahnen oft nicht dem durchgehenden Rasterabstand der Wandöffnungen der Kabelbahnen entspricht. Damit die Haken der Verbindungsplatten in diesem Fall in die Wandöffnungen eingehängt werden können, müssen die Endstücke der einander zugewandten Kabelbahnen entsprechend beabstandet werden, weshalb eine unerwünschte Lücke resultiert.

Aus [3], DE19841643A1, ist eine Verbindungsvorrichtung für eine Kabelbahn bekannt, die aus einem im Querschnitt etwa U-förmigen Blechteil besteht, dessen erstes Ende gering verkröpfte Seiten- und Bodenwandungen aufweist, so dass ein weiteres Blechteil mit seinem unverkröpften zweiten Ende in das verkröpfte erste Ende des ersten Blechteils einsetzbar und in dieser Soll-Lage fixierbar ist. An den Seitenwandungen des einen Endes sind Rast- und Riegelausnehmungen ausgebildet, und an den Seitenwandungen des anderen Endes sind dazu passende Rasten und Riegel ausgebildet, so dass die beiden Kabelbahnabschnitte quer zu ihrem Längsverlauf ineinander drückbar und miteinander verbindbar sind. Die Kabelbahnabschnitte dieser Kabelbahn sind daher asymmetrisch als Steckverbinder ausgestaltet. Die Verbindungsvorrichtung ist somit in die Kabelbahn integriert, weshalb die Kabelbahn Teil der Verbindungsvorrichtung und hinsichtlich der Ausgestaltung entsprechend definiert ist. Dadurch resultieren unerwünschte Einschränkungen der Gestaltungsmöglichkeiten der Kabelbahn. Zudem resultiert ein erhöhter Fertigungsaufwand für die Kabelbahnabschnitte mit den darin integrierten Teilen der Verbindungsvorrichtung. Ein oft wünschbares Zuschneiden der Kabelbahnabschnitte vor Ort ist nicht möglich, weshalb ein idealer Verlauf der Kabelbahn gegebenenfalls nicht realisiert werden kann.

[4], EP2869417A1, offenbart eine Verbindungsvorrichtung mit zwei miteinander koppelbaren Verbindungsplatten, die gegeneinander gerichtete Haken aufweisen, die in Wandöffnungen von Kabelbahnabschnitten eingreifen können. Die Verbindungsplatten können in stirnseitig aneinander anstossende Endstücke von Kabelbahnen eingehängt und miteinander gekoppelt werden, um die benachbarten Kabelbahnen miteinander zu verbinden. Dazu weist die erste Verbindungsplatte ein massives C-Profil-förmiges Aufnahmeprofil mit gegeneinander gerichteten Abschlussplatten auf, in die eine Arretierschraube eingedreht ist, um die Verbindungsplatten zu fixieren. Diese Verbindungsvorrichtung ist relativ aufwendig ausgestaltet und nicht leicht handhabbar. Das Aufnahmeprofil erfordert zudem entsprechend grosse Abmessungen.

Der vorliegenden Erfindung liegt daher die Aufgabe zugrunde, eine verbesserte Verbindungsvorrichtung für Kabelbahnabschnitte sowie eine verbesserte Kabelbahn mit Kabelbahnabschnitten zu schaffen, die mit solchen Verbindungsvorrichtungen miteinander verbunden sind.

Die Verbindungsvorrichtung soll leicht handhabbar, einfach aufgebaut und kostengünstig herstellbar sein und nur wenig Raum in Anspruch nehmen, sodass der nutzbare Querschnitt der Kabelbahn kaum reduziert wird.

Die Verbindungsvorrichtung soll es erlauben, eine stabile Verbindung zwischen zwei Kabelbahnabschnitten zu erstellen, die auch grösseren Krafteinwirkungen standhalten, die auf die Kabelbahnabschnitte einwirken.

Die Verbindungsvorrichtung soll keine Änderungen an den Kabelbahnabschnitten erfordern, so dass beliebige und gegebenenfalls am Installationsort in der Länge zugeschnittene Kabelbahnabschnitte miteinander verbindbar sind.

Die Verbindungsvorrichtung soll zudem bei Kabelbahnen aller Art, wie Kapelpritschen, Kabelleitern, Kabelkanälen und dergleichen, verwendbar sein, die gelochte Platten, wie Seitenwände mit Längslochungen, aufweisen.

Vorzugsweise soll die Verbindung beim Zusammenschieben der Kabelbahnabschnitte automatisch erstellt werden.

Weiterhin sollen beim Einsatz der Verbindungsvorrichtung Potenzialdifferenzen innerhalb der Kabelbahn sowie Kriechströme nach Möglichkeit vermieden werden.

Diese Aufgabe wird mit einer Verbindungsvorrichtung und einer Kabelbahn gelöst, welche die in Anspruch 1 bzw. 13 angegebenen

Merkmale aufweisen. Vorteilhafte Ausgestaltungen der Erfindung sind in weiteren Ansprüchen angegeben.

Die Vorrichtung dient zum mechanischen Verbinden und zum elektrischen kontaktieren benachbarter erster und zweiter Kabelbahnabschnitte, die je wenigstens ein erstes bzw. zweites Bodenelement und beidseits daran anschliessende mit Wandöffnungen versehene erste bzw. zweite Seitenwände umfassen und die nach deren Verbindung koaxial zu einer gemeinsamen Bahnachse ausgerichtet eine Kabelbahn bilden.

Die Vorrichtung umfasst ein mit ersten Haken versehenes vorzugsweise plattenförmiges erstes Verbindungsteil und ein mit zweiten Haken versehenes vorzugsweise plattenförmiges zweites Verbindungsteil, die miteinander koppelbar und mit den gegeneinander gerichteten ersten und zweiten Haken in Wandöffnungen benachbarter erster und zweiter Seitenwände einsetzbar sind.

Erfindungsgemäss umfasst das erste Verbindungsteil ein mit den ersten Haken versehenes Haltesegment und ein Kopplungssegment, das mittels wenigstens einer Gewindestange mit dem zweiten Verbindungsteil verschiebbar und arretierbar verbunden oder verbindbar ist, wobei die Gewindestange entweder in das erste Verbindungsteil eingesetzt und durch eine zumindest annähernd parallel zur Vorrichtungssachse verlaufende Längsöffnung im zweiten Verbindungsteil hindurch geführt oder in das zweite Verbindungsteil eingesetzt und durch eine zumindest annähernd parallel zur Vorrichtungsachse verlaufende Längsöffnung im ersten Verbindungsteil hindurch geführt ist.

Diese Lösung mit der Anordnung einer Längsöffnung im ersten oder zweiten Verbindungsteil erlaubt eine besonders einfache und zugleich stabile Verbindung zwischen den beiden Verbindungsteilen. Vorteilhaft können mehrere Gewindestangen vorgesehen werden, deren Durchmesser vorzugsweise dem Durchmesser der Längsöffnung entspricht. Auf diese Weise wird nebst der Verbindung der beiden Verbindungsteil zusätzlich eine axiale Ausrichtung derselben gewährleistet. Weiterhin wird wenig Raum in Anspruch genommen, sodass sich der nutzbare Querschnitt der Kabelbahn nicht reduziert, wenn die Verbindungsvorrichtung auf dessen Innenseite montiert wird. Die Verbindungsteile können durch einfache Stanzvorgänge in besonders einfacher Weise gefertigt werden.

Die erfindungsgemässe Verbindungsvorrichtung hat den zusätzlichen Vorteil, dass durch die Verbindungsteile gute elektrische Kontaktierungen untereinander und mit den Kabelbahnabschnitten erstellt werden. Durch die praktische widerstandsfreie elektrische Verbindung erfolgt ein Potentialausgleich zwischen den Kabelbahnabschnitten, sodass störende Spannungen und gegebenenfalls Kriechströme vermieden werden.

Die Gewindestange kann in das erste Verbindungsteil eingesetzt oder eingedreht und mit einer Schraubenmutter versehenen sein oder in das erste Verbindungsteil eindrehbar und mit einem Schraubenkopf versehen sein.

Mittels erfindungsgemässen Verbindungsvorrichtungen können benachbarte Kabelbahnabschnitte, die im Werk gefertigt oder am Installationsort zugeschnittene wurden, derart miteinander verbunden werden, dass sie stirnseitig aneinander anstossen, ohne dass dazwischen eine Lücke resultiert.

Die beiden miteinander koppelbaren Verbindungsteile jeder Verbindungsvorrichtung werden gegeneinander verschoben, bis die Kabelbahnabschnitte stirnseitig aneinander anliegen, wonach die beiden Verbindungsteile in der gewählten Position gegenseitig fixiert bzw. arretiert werden. In bevorzugten Ausgestaltungen ist hingegen eine Kopplungsvorrichtung oder Rast Vorrichtung vorhanden, mittels der die Verbindung automatisch beim Zusammenschieben der Kabelbahnabschnitte resultiert.

Auch Kabelbahnabschnitte, die am Installationsort zugeschnitten wurden und deren Wandöffnungen undefinierte Abstände zur Stirnseite der Kabelbahnabschnitte aufweisen, können stirnseitig lückenlos aneinander anliegend miteinander verbunden und arretiert werden. Unterschiedliche Abstände der Wandöffnungen werden durch eine entsprechende Verschiebung der Verbindungsteile kompensiert.

Zwei Verbindungsvorrichtungen können mit wenigen Handgriffen mit den paarweise einander zugewandten Seitenwänden von zwei Kabelbahnabschnitten verbunden und fixiert werden. Die Verbindungsvorrichtungen können auf der Innenseite oder der Aussenseite der Kanalwände montiert werden. Da die erfindungsgemässen Verbindungsvorrichtungen nur wenig Raum in Anspruch nehmen, können sie vorteilhaft auf der Innenseite der Kanalwände installiert werden, ohne den Kanalquerschnitt wesentlich einzuschränken.

Die Verbindungsvorrichtung kann wahlweise an unterschiedliche Kabelbahnen bzw. Kabelbahnabschnitte angepasst werden, die gelochte Seitenwände aufweisen. Für die Befestigung der Verbindungsteile sind keine weiteren Elemente der Kabelbahnabschnitte erforderlich. Die Kabelbahnabschnitte können beidseitig beliebig, d.h. auch identisch ausgestaltet sein, weshalb für die Realisierung der Verbindung kein zusätzlicher Herstellungsaufwand resultiert. Die Verbindungsvorrichtung ist daher praktisch universell einsetzbar.

In vorzugsweisen Ausgestaltungen ist die Verbindungsvorrichtung derart ausgebildet, dass die beiden Verbindungsteile bzw. die von den Verbindungsteilen gehaltenen Kabelbahnabschnitte gegeneinander gezogen und verrastet werden können, so dass sie spielfrei aneinander anliegend gehalten sind.

Vorzugsweise umfassen das erste und/oder das zweite Verbindungsteil je wenigstens ein Bedienelement, das manuell oder mittels eines Werkzeugs erfasst werden kann, um das erste und/oder das zweite Verbindungsteil zu verschieben oder zu verspannen. Vorzugsweise sind beide Verbindungsteile je mit einem Bedienelement versehen, die mittels einer Klemme oder Zange erfasst und gegeneinander gezogen werden können.

Alternativ können auch die beiden Kabelbahnabschnitte mittels wenigstens eines Werkzeugs erfasst und gegeneinander gezogen werden. Nach der Fixierung der Verbindungsvorrichtung können diese Werkzeuge wieder entfernt werden. Beispielsweise werden Haken in die Wandöffnungen benachbarter Kabelbahnabschnitte eingehängt und mittels einer Klemme oder Zange gegeneinander gezogen, wonach die Verbindungsvorrichtung installiert und fixiert wird.

Vorzugsweise sind Flanschelemente, Zugschrauben, Zugstangen, oder Gewindestangen vorgesehen, mittels denen die beiden Verbindungsteile oder daran vorgesehene Flanschelemente, vorzugsweise die genannten Bedienelemente, gegeneinander gezogen werden können. Möglich ist auch der Einsatz von Spannvorrichtungen. Vorzugsweise wird die erfindungsgemässe Verbindungsvorrichtung daher derart ausgebildet, dass die stirnseitig zusammengefügten Kabelbahnabschnitte in einfacher Weise fixiert werden können.

In vorzugsweisen Ausgestaltungen sind das erste und das zweite Verbindungsteil kraftschlüssig und/oder formschlüssig miteinander verbindbar. Zur formschlüssigen Verbindung weisen die beiden Verbindungsteile zueinander korrespondierende erste und zweite Formelemente auf, die formschlüssig ineinander eingreifen und die beiden Verbindungsteile stabil miteinander verbinden.

In einer weiteren vorzugsweisen Ausgestaltung ist vorgesehen, dass das erste und/oder das zweite Verbindungsteil kraftschlüssig und/oder formschlüssig mit der zugehörigen Seitenwand verbindbar ist. Zur formschlüssigen Verbindung mit der zugehörigen Seitenwand weist das erste oder das zweite Verbindungsteil Formelemente auf, die zu Formelementen korrespondieren, die an den Seitenwänden der Kabelbahnabschnitte vorgesehen sind. Beispielsweise weisen die Seitenwände der Kabelbahnabschnitte ein Raster auf, welches erlaubt, die Verbindungsvorrichtung formschlüssig zu halten. Dieses Raster kann bei der Fertigung der Kabelbahnabschnitte in einfacher Weise in die Seitenwände eingeprägt werden. Mit minimalem Aufwand können die Kabelbahnabschnitte daher vorteilhaft in die Verbindungsvorrichtung integriert werden. Die Weite des Rasters wird vorzugsweise entsprechend einer tolerierbaren Lücke zwischen den Kabelbahnabschnitten gewählt. Beispielsweise wird eine Wellenstruktur gewählt mit Wellenbergen und Wellentälern, die senkrecht oder geneigt zur Bodenplatte verlaufen. Vorteilhaft sind auch Sägezahnformen einsetzbar. Sofern geneigte Rasterlinien vorgesehen werden, werden die Verbindungsvorrichtungen automatisch gegen die Bodenplatte gezogen und an der Bodenplatte fixiert.

Die Verbindungsvorrichtungen halten die Seitenwände der Kabelbahn nicht nur zusammen, sondern bilden auch eine Verstärkung derselben. Teile der Verbindungsvorrichtungen, nämlich die Haken der beiden Verbindungsteile, greifen formschlüssig in die Wandöffnungen der Seitenwände ein, wodurch die Verbindungsvorrichtungen funktionell in die resultierenden Seitenwände der Kabelbahn integriert werden. Die Haken des ersten Verbindungsteils und die Haken des zweiten Verbindungsteils weisen denselben Rasterabstand auf, wie die zugeordneten Wandöffnungen in den Seitenwänden.

In einer besonders bevorzugten Ausgestaltung sind die ersten Haken und die zweiten Haken der beiden miteinander verbundenen Verbindungsteile vorzugsweise entlang einer Geraden gegeneinander gerichtet und liegen in einer Ebene. Grundsätzlich ist es auch möglich, zwei oder mehrere Reihen von Haken vorzusehen. Bereits mit wenigen Haken wird eine stabile Verbindung erzielt. Beispielsweise weist jedes der Verbindungsteile zwei bis sechs Haken auf. Idealerweise werden zwei bis drei Haken vorgesehen, die in einfacher Weise aus dem ersten und zweiten Verbindungsteil ausgeschnitten und ausgebogen werden können.

Durch die axiale Ausrichtung der Haken wird sichergestellt, dass diese sich auch bei grösseren vertikalen Bewegungen und Schwingungen der Kabelbahnabschnitte, wie sie in der Praxis oft auftreten, nicht aus den Wandöffnungen lösen können. Auch Deformationen oder eine Zerstörung der Verbindungsvorrichtung bei stärkeren Krafteinwirkungen wird bei der erfindungsgemässen Verbindungsvorrichtung praktisch ausgeschlossen.

In einer bevorzugten Ausgestaltung der Verbindungsvorrichtung ist vorgesehen, dass das Haltesegment des ersten Verbindungsteils wenigstens einen Aufnahmeschlitz aufweist, durch den hindurch die zweiten Haken des zweiten Verbindungsteils hindurch führbar sind. Es können auch mehrere Aufnahmeschlitze vorgesehen sein, die die Aufnahme von mehreren Reihen von zweiten Haken erlauben.

Die zweiten Haken sind vorzugsweise entlang der Längsachse des Aufnahmeschlitzes verschiebbar und senkrecht zur Längsachse des Aufnahmeschlitzes spielfrei gehalten. Durch die im Aufnahmeschlitz spielfrei gehaltenen Haken werden die beiden parallel zur Bahnachse ausgerichteten Verbindungsteile ineinander verschränkt. Vertikal oder schräg auf die Verbindungsvorrichtung einwirkende Torsionskräfte können daher aufgefangen werden, sodass die Ausrichtung der Kabelbahn entlang der Bahnachse gewährleistet bleibt. Gleichzeitig wird verhindert, dass übermässige Scherkräfte auf die Gewindestange einwirken können.

In vorzugsweisen Ausgestaltungen ist das Haltesegment der Verbindungsplatte mit den ersten Haken versehen. Die Haken können daher aus dem Haltesegment ausgeschnitten und ausgebogen sein.

In weiteren bevorzugten Ausgestaltungen können das erste und das zweite Verbindungsteil auch zweiteilig oder mehrteilig ausgebildet sein. Die einzelnen Teile der Verbindungsteile können bestimmte Funktionen der Verbindungsteile erfüllen, und werden nachstehend daher Funktionsteile oder Funktionsplatten genannt.

Das erste Verbindungsteil umfasst z.B. eine erste Funktionsplatte, die mit den ersten Haken versehen ist, und eine zweite Funktionsplatte, an der die Gewindestange und gegebenenfalls wenigstens ein Aufnahmeschlitz vorgesehen sind. Die erste Funktionsplatte bildet daher vorzugsweise das Haltesegment und die zweite Funktionsplatte bildet vorzugsweise das Kopplungssegment.

Die Funktionsplatten können bedarfsweise ausgestaltet werden und z.B. unterschiedliche Dicken aufweisen. Die zweite Funktionsplatte kann z.B. derart dimensioniert werden, dass eine axiale Verbindung der stirnseitig aneinander abstossenden Kabelbahnabschnitte gewährleistet ist und einwirkende Torsionskräfte aufgefangen werden.

Die Funktionsteile oder Funktionsplatten können mit unterschiedlichen Verbindungsmitteln, z.B. durch Tox-Verbindungen, Schraubverbindungen, Formelemente, und dergleichen, miteinander verbunden oder verschiebbar zueinander gehalten werden.

In einer vorzugsweisen Ausgestaltung weist die zweite Funktionsplatte eine oder mehrere Durchtrittsöffnungen auf, durch die die ersten Haken der ersten Funktionsplatte hindurch geführt sind. Eine gegenseitige Verbindung der Funktionsplatten, z.B. eine Rastverbindung, kann durch die entsprechend gebogenen Haken realisiert werden. Vorzugsweise wird vorgesehen, dass an beiden Enden der Durchtrittsöffnungen gegeneinander gerichtete Rastelemente vorgesehen sind. Die Funktionsplatten können daher vorteilhaft durch Einrasten oder Einschnappen miteinander verbunden werden.

Vorzugsweise wird vorgesehen, dass die ersten Haken in den Durchtrittsöffnungen parallel zur Bahnachse verschiebbar oder unverschiebbar, gegebenenfalls eingerastet, gehalten sind. Senkrecht zur Bahnachse sind die Haken vorzugsweise spielfrei in den Durchtrittsöffnungen gehalten, sodass Torsionskräfte übertragen werden können.

Oben wurde bereits ausgeführt, dass das erste und das zweite Verbindungsteil nach dem Festziehen der Schraubenmutter vorzugsweise formschlüssig miteinander verbunden und somit nicht mehr gegeneinander verschiebbar sind. Diese formschlüssige Verbindung kann vorteilhaft realisiert werden, indem das zweite Verbindungsteil angrenzend an die Längsöffnung, durch die die Gewindestange hindurch tritt, Arretierelemente, Formelemente oder Rastelemente aufweist, mittels denen die festgezogene Schraubenmutter oder eine damit gehaltene Arretierplatte fixierbar ist. D.h., eine Arretierplatte oder eine entsprechend ausgebildete Unterlagsscheibe, die mit entsprechenden Formelementen oder Rastelementen versehen sind, die beim Festziehen der Schraubenmutter in die Arretierelemente des zweiten Verbindungsteils eingreifen, wodurch das zweite Verbindungsteil ortsfest zum ersten Verbindungsteil gehalten wird. Wie erwähnt kann eine formschlüssige Verbindung zwischen dem ersten und/oder dem zweiten Verbindungsteil und der Seitenwand und/oder zwischen dem ersten und/oder dem zweiten Verbindungsteil untereinander und/oder zwischen dem zweiten Verbindungsteil und der Schraubenmutter bzw. dem Schraubenkopf wahlweise vorgesehen werden. Ferner können weitere Lösungen eingesetzt werden, die ein selbsttätiges Lösen der Schraubenmutter oder des Schraubenkopf verhindern. Beispielsweise werden

Alle beschriebenen kraftschlüssigen und/oder formschlüssigen Verbindungen können einzeln oder wahlweise in Kombination miteinander praktisch ohne zusätzlichen Aufwand realisiert werden.

Die beiden vorzugsweise plattenförmigen Verbindungsteile können je aus einer einstückigen Abwicklung, z.B. aus einer Eisenplatte oder Blechplatte, geformt werden. Bevor die ausgeschnittene Abwicklung geformt wird, kann diese noch bearbeitet werden, um Einformungen oder Ausformungen zu bilden oder Material auszuschneiden. In dieser Weise können die Haken aus einem Segment ausgeschnitten und ausgeformt werden. Ebenso kann ein Gewinde oder ein Gewindeeinsatz sowie Formelemente, wie Rastelemente oder Verriegelungselemente, in die Abwicklung eingearbeitet werden.

Nachfolgend wird die Erfindung anhand von Zeichnungen näher erläutert. Dabei zeigt:
- Fig. 1: eine erfindungsgemässe Kabelbahn 1 mit einem ersten und einem zweiten Kabelbahnabschnitt 1A, 1B, deren Seitenwände 11A, 11B paarweise je durch eine erfindungsgemässe Verbindungsvorrichtung 2, 2' miteinander verbunden sind, die je ein erstes und ein zweites Verbindungsteil 21, 22 aufweisen;
- Fig. 2: die beiden Verbindungsvorrichtungen 2, 2' von Fig. 1 ohne die Kabelbahnabschnitte 1A, 1B und mit verbliebenen Schutzelementen 15A, 15B, die in Fig. 1 stirnseitig an den Bodenplatten 12A, 12B der Kabelbahnabschnitte 1A, 1B vorgesehen sind;
- Fig. 3: die beiden Verbindungsvorrichtungen 2, 2' von Fig. 2 in Explosionsdarstellung je mit dem plattenförmigen ersten Verbindungsteil 21, das eine Gewindestange 3 aufweist, die durch eine Längsöffnung 221 im zweiten Verbindungsteil 22 hindurch führbar ist, das in der Folge mittels einer Schraubenmutter 31 gegenüber dem ersten Verbindungsteil 21 fixierbar ist;
- Fig. 4a: eine Verbindungsvorrichtung 2 in einer vorzugsweisen Ausgestaltung mit einem ersten Verbindungsteil 21, das eine erste Funktionsplatte 21A, die ein mit ersten Haken 218 versehenes Haltesegment bildet, und eine zweite Funktionsplatte 21B umfasst, die ein Kopplungssegment bildet;
- Fig. 4b: eine Kabelbahn 1 mit einer Verbindungsvorrichtung 2 gemäss Fig. 4a;
- Fig. 5a: eine Verbindungsvorrichtung 2 in einer weiteren vorzugsweisen Ausgestaltung mit einem ersten Verbindungsteil 21, das eine mit den ersten Haken 218 versehene erste Funktionsplatte 21A und eine zweite Funktionsplatten 21B mit einem Längsschlitz 211 umfasst, durch den zwei Gewindestangen 3 hindurch führbar sind, die in die zweite Verbindungsplatte 22 eingesetzt oder eindrehbar sind;
- Fig. 5b: eine Kabelbahn 1 mit einer Verbindungsvorrichtung 2 gemäss Fig. 5a;
- Fig. 5c: die Kabelbahn 1 von Fig. 5b mit einem Kreisschnitt durch die Frontseite des Kabelbahnabschnitts 1B; und
- Fig. 6: eine Verbindungsvorrichtung 2 von Fig. 5a in einer vorzugsweisen Ausgestaltung mit der ersten Funktionsplatte 21A und dem zweiten Verbindungsteil 22, die von der zweiten Funktionsplatte 21B verschiebbar gehalten sind und zueinander korrespondierende Rastelemente 217, 227 aufweisen.

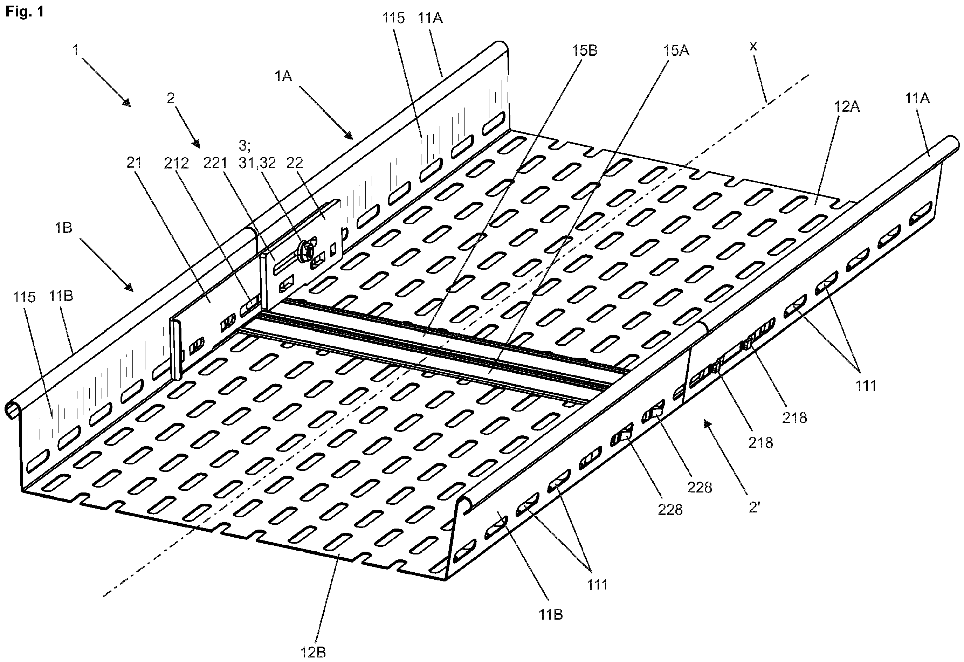

Fig. 1 zeigt eine erfindungsgemässe Kabelbahn 1 mit zwei Kabelbahnabschnitten 1A, 1B, die durch zwei erfindungsgemässe Verbindungsvorrichtungen 2, 2' miteinander verbunden und koaxial zu einer gemeinsamen Bahnachse x ausgerichtet sind.

Die Kabelbahnabschnitte 1A, 1B weisen zwei Seitenwände 11A bzw. 11B auf, die durch Bodenelemente 12A bzw. 12B miteinander verbunden sind. Die beiden vorzugsweise identischen Verbindungsvorrichtungen 2, 2' liegen plattenförmig an den Seitenwänden 11A, 11B an und verleihen der Kabelbahn 1 im Verbindungsbereich eine erhöhte Stabilität. An den gegeneinander gerichteten Stossstellen der Bodenelemente 12A bzw. 12B sind dünne streifenförmige Schutzelemente 15A, 15B vorgesehen, die insbesondere nach dem Schneiden der Kabelbahnen scharfe Kanten, welche die eingelegten Kabel schädigen könnten, überdecken.

Wesentlich für die Montage der erfindungsgemässen Verbindungsvorrichtung 2 ist, dass die Seitenwände 11A, 11B der beiden Kabelbahnabschnitte 1A, 1B mit Wandöffnungen 111 versehen sind. Sofern dieses Erfordernis erfüllt ist, lassen sich beliebige Kabelbahnabschnitte 1A, 1B anhand von erfindungsgemässen Verbindungsvorrichtungen 2 stirnseitig aneinander anliegend miteinander verbinden. Ein weiteres Zusammenwirken der Verbindungsvorrichtung 2 mit den Seitenwänden 11A, 11B ist nicht erforderlich.

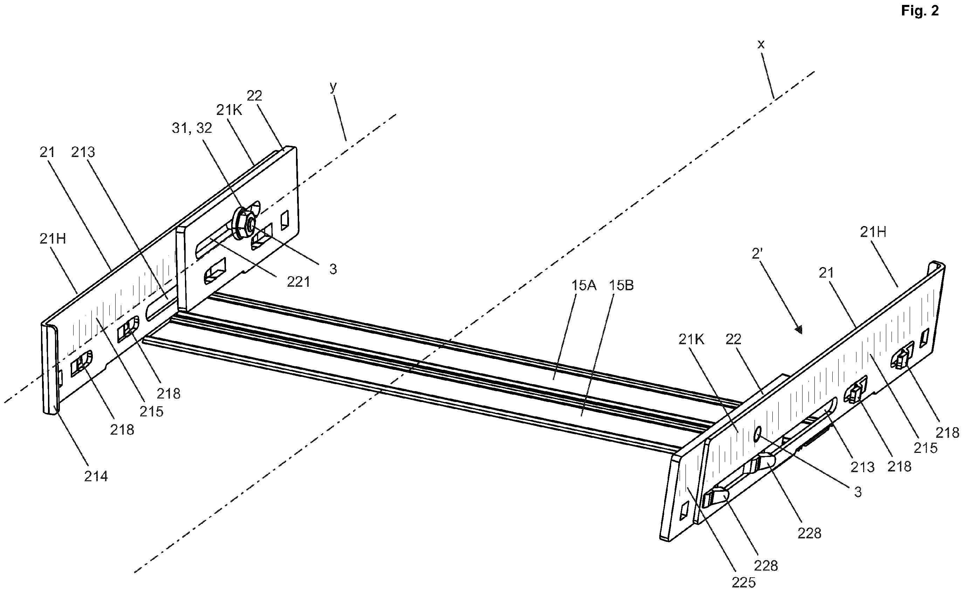

Die in Fig. 1 gezeigte Verbindungsvorrichtung 2 umfasst zwei plattenförmige Verbindungsteile 21, 22, die mit Haken 218 bzw. 228 versehen sind (siehe Fig. 2). Fig. 1 zeigt, dass auf jeder Seite der Kabelbahn 1 eine Verbindungsvorrichtung 2 bzw. 2' installiert ist. Die näher liegende Verbindungsvorrichtung 2', die durch die zugehörigen Seitenwände 11A, 11B verdeckt ist, ist um 180° gegenüber der entfernt liegenden Verbindungsvorrichtung 2 gedreht. Auf der linken Kanalseite ist ein erstes Verbindungsteil 21 mit dessen Haken 218 in die Kanalwand 11B und ein zweites Verbindungsteil 22 mit dessen Haken 228 in die Kanalwand 11A eingehängt. Jedes erste Verbindungsteil 21 überdeckt beide zugehörigen Seitenwände 1A, 1B und liegt direkt daran an. Die zweiten Verbindungsteile 22 überdecken in dieser Ausgestaltung nur eine der Kanalwände 11A oder 11B.

Das erste Verbindungsteil 21 der Verbindungsvorrichtung 2 weist eine Gewindestange 3 auf, die durch eine Längsöffnung 221 im zweiten Verbindungsteil 22 hindurch tritt und einen Schraubenkopf 32 aufweist oder mit einer Schraubenmutter 31 versehen ist, mittels der das zweite Verbindungsteil 22 gegen das erste Verbindungsteil 21 gepresst und gegenüber diesem fixiert wird. Die Gewindestange 3 kann daher der Schaft einer mit einem Schraubenkopf 32 versehene Schraube sein, die in ein Gewinde im ersten Verbindungsteil 21 eingedreht wird, um das zweite Verbindungsteil 22 zu arretieren. Alternativ kann die Gewindestange 3 im ersten Verbindungsteil 21 gehalten und mit einer Schraubenmutter 31 versehen sein, die festgezogen wird, um das zweite Verbindungsteil 22 zu arretieren.

Schematisch ist gezeigt, dass die Seitenwände 11A, 11B der Kabelbahnabschnitte 1A, 1B in dieser vorzugsweisen Ausgestaltung eine Rasterung aufweisen, die mit einer Rasterung 215 oder Formelementen des ersten Verbindungsteils 21 zusammenwirken kann, um das erste Verbindungsteil 21 gegenüber der anliegenden Seitenwand 11A, 11B zu fixieren.

Fig. 2 zeigt die beiden Verbindungsvorrichtungen 2, 2' von Fig. 1 ohne die Kabelbahnabschnitte 1A, 1B und mit verbliebenen Schutzelementen 15A, 15B, die in Fig. 1 optional stirnseitig an den Bodenplatten 12A, 12B der Kabelbahnabschnitte 1A, 1B vorgesehen sind. Das erste Verbindungsteil 21 umfasst ein mit den ersten Haken 218 verbundenes Haltesegment 21H und ein mit dem plattenförmigen zweiten Verbindungsteil 22 gekoppeltes bzw. verschraubtes Kopplungssegment 21K auf. Das erste Verbindungsteil 21 umfasst daher zwei Teile 21H, 21K, die unterschiedliche Funktionen erfüllen. In vorzugsweisen Ausgestaltungen sind das Haltesegment 21H und das Kopplungssegment 21K durch eine Stufe gegeneinander abgestuft, die derart gewählt ist, dass das Haltesegment 21H flächig an der Kanalwand und das Kopplungssegment 21K flächig am zweiten Verbindungsteil 22 anlegen kann.

Die ersten Verbindungsteile 21 sind auf der Frontseite und der Rückseite und die zweiten Verbindungsteile 22 auf der dem ersten Verbindungsteil 21 zugewandten Seite je mit einer Rasterung oder mit Formelementen 215 bzw. 225 versehen. Das erste Verbindungsteil 21 kann in dieser vorzugsweisen Ausgestaltung daher formschlüssig einerseits mit der zugehörigen Seitenwand 11A, 11B und andererseits formschlüssig mit dem zweiten Verbindungsteil 22 verbunden werden.

Bei der zugewandten Verbindungsvorrichtung 2' ist sichtbar, dass das erste Verbindungsteil 21 in dieser vorzugsweisen Ausgestaltung einen Aufnahmeschlitz 213 aufweist, durch den die Haken 228 des zweiten Verbindungsteils 22 hindurch treten. Vorzugsweise sind die parallel zur Bahnachse x bzw. entlang der Vorrichtungssachse y verschiebbar geführten Haken 228 senkrecht zur Bahnachse x spielfrei gehalten, wodurch die beiden Verbindungsteile 21, 22 ebenfalls parallel zur Bahnachse x gehalten sind. Die Haken 218, 228 ragen somit aus der Verbindungsvorrichtung 2' hervor und können in die Wandöffnungen 110 eintreten. Es ist ebenfalls ersichtlich, dass die Haken der beiden Verbindungsteile 21, 22 gegeneinander gerichtet sind, sodass die Kabelbahnabschnitte 1A, 1B gegeneinander gezogen werden. Weiterhin ist die Gewindestange 3 sichtbar, die im ersten Verbindungsteil 21 gehalten ist. Sofern ein Teil des Kopplungssegments 21K weggeschnitten ist, liegen die zweiten Haken 228 frei.

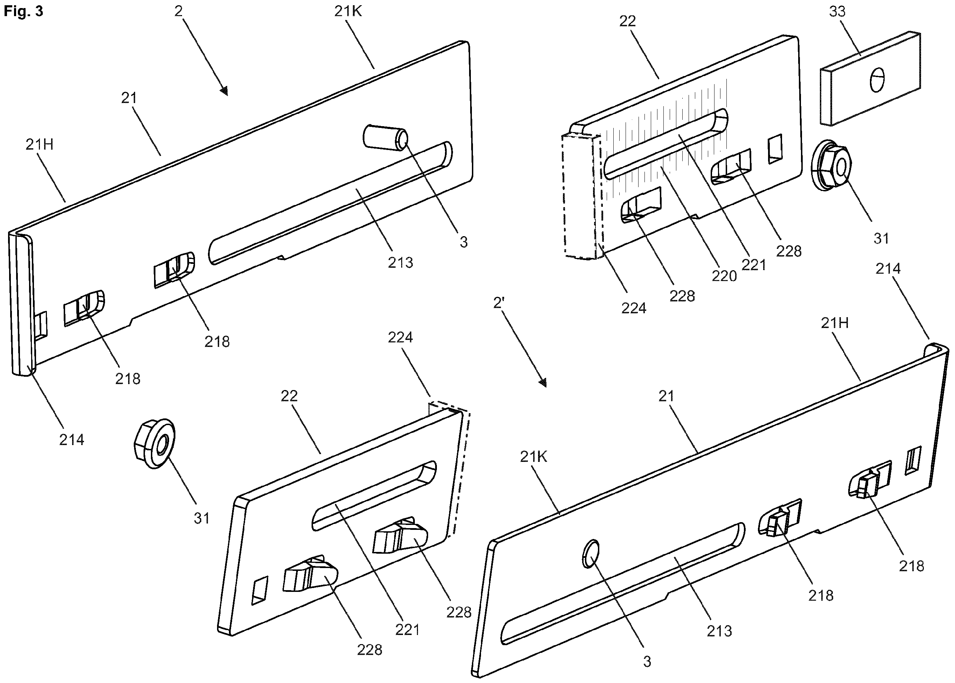

Fig. 3 zeigt die beiden Verbindungsvorrichtungen 2, 2' von Fig. 2 in Explosionsdarstellung mit den voneinander getrennten Verbindungsteilen 21, 22. Die in das erste Verbindungsteil 21 bzw. in das Kopplungssegment 21K eingesetzte Gewindestange 3 und der optional vorgesehene Aufnahmeschlitz 213, durch den die Haken 228 des zweiten Verbindungsteils 22 hindurch treten können, sind frei sichtbar. Ebenfalls sichtbar ist, dass die ersten und zweiten Haken 218, 228 aus den Verbindungsteilen 21, 22 ausgeschnitten und ausgebogen sind, sodass sie in die Wandöffnungen 111 der Seitenwände 1A, 1B eingreifen können. Freigelegt sind ferner die Längsöffnungen 221 in den zweiten Verbindungsteilen 22, durch die die Gewindestangen 3 hindurch treten können. Das rechts gezeigte zweite Verbindungsteil 22 weist angrenzend an die Längsöffnung 221 eine Rasterung 220 mit Formelementen auf, in die die Schraubenmutter 31 oder daran vorgesehene Formelemente eingreifen können. Alternativ kann auch eine Arretierplatte 33 oder eine Unterlagsscheibe mit Formelementen oder Rastelementen vorgesehen sein. Beim Anziehen der Schraubenmutter 31 resultiert somit eine formschlüssige Verbindung zwischen dem zweiten Verbindungsteil 22 und der Schraubenmutter 31 oder der Arretierplatte 33. Somit sind optional formschlüssige Verbindungen zwischen den Seitenwänden 11A, 11B und dem ersten Verbindungsteil 21 sowie zwischen dem ersten Verbindungsteil 21 und dem zweiten Verbindungsteil 22 und zusätzlich zwischen dem zweiten Verbindungsteil 22 und der Schraubenmutter 31 oder der Arretierplatte 33 wahlweise realisierbar. D.h., die formschlüssigen Verbindungen können in beliebigen Kombinationen realisiert werden. Möglich ist auch die Realisierung keiner oder nur einer formschlüssigen Verbindung zwischen den genannten Vorrichtungsteilen 11A, 11B; 21; 22; 31; 33.

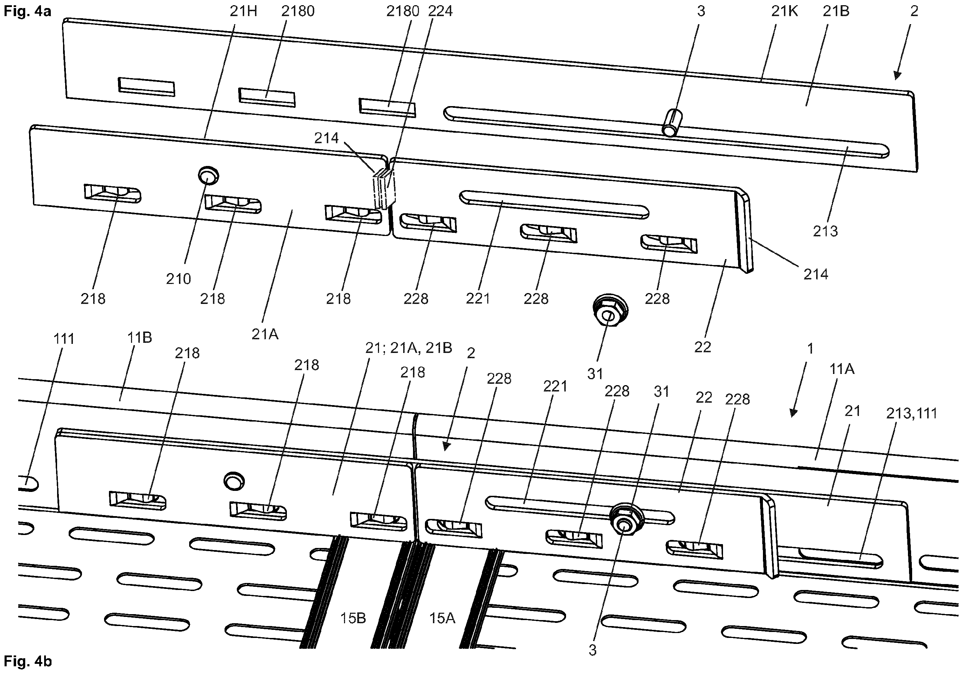

Fig. 3 zeigt ferner, dass die ersten und zweiten Verbindungsteile 21, 22 optional mit Bedienelementen 214, 224 versehen sind, die es erlauben, die beiden Verbindungsteile 21, 22 manuell oder mittels eines Werkzeugs gegeneinander zu verschieben. Fig. 4a zeigt eine Verbindungsvorrichtung 2 in einer weiteren vorzugsweisen Ausgestaltung mit einem ersten Verbindungsteil 21, das zwei miteinander verbundene oder verbindbare Funktionsplatten 21A, 21B umfasst. Nach der Verbindung der beiden Funktionsplatten 21A, 21B resultiert ein zweiteiliges erstes Verbindungsteil 21, das funktional einem ersten Verbindungsteil 21 entspricht, wie es in Fig. 3 gezeigt ist. Die erste Funktionsplatte 21A, die das Haltesegment 21H bildet, umfasst die ersten Haken 218, die durch Durchtrittsöffnungen 2180 in der zweiten Funktionsplatte 21B, die das Kopplungssegment 21K bildet, hindurch treten und gegebenenfalls einrasten können. Die zweite Funktionsplatte 21B bzw. das Kopplungssegment 21K ist mit der Gewindestange 3 und einem Aufnahmeschlitz 213 versehen, durch den die zweiten Haken 228 des zweiten Verbindungsteils 22 hindurch treten können. Nach Verbindung der beiden Funktionsplatten 21A, 21B resultiert funktional eine erstes Verbindungsteil 21 mit einem Haltesegment 21H und einem Kopplungssegment 21K, wie es in Fig. 3 gezeigt ist.

Fig. 4a zeigt ferner, dass die erste Funktionsplatte 21A und das zweite Verbindungsteil 22 an den einander zugewandten Enden optional mit Bedienelementen 214, 224, gegebenenfalls umgebogenen Flanschelementen, versehen sind. Flanschelemente werden vorzugsweise mit den Platten 21, 21A, 21B, 22 ausgestanzt und anschliessend umgebogen. Die Bedienelemente 214, 224 können mittels eines Werkzeugs erfasst und gegeneinander gezogen werden, wonach die Schraubenmutter 31 festgezogen wird. Durch den Einbau von Nuten, Sicken oder dergleichen können die Bedienelemente 214, 224 verstärkt werden.

Fig. 4b zeigt eine Kabelbahn 1 mit einer Verbindungsvorrichtung 2 gemäss Fig. 4a.

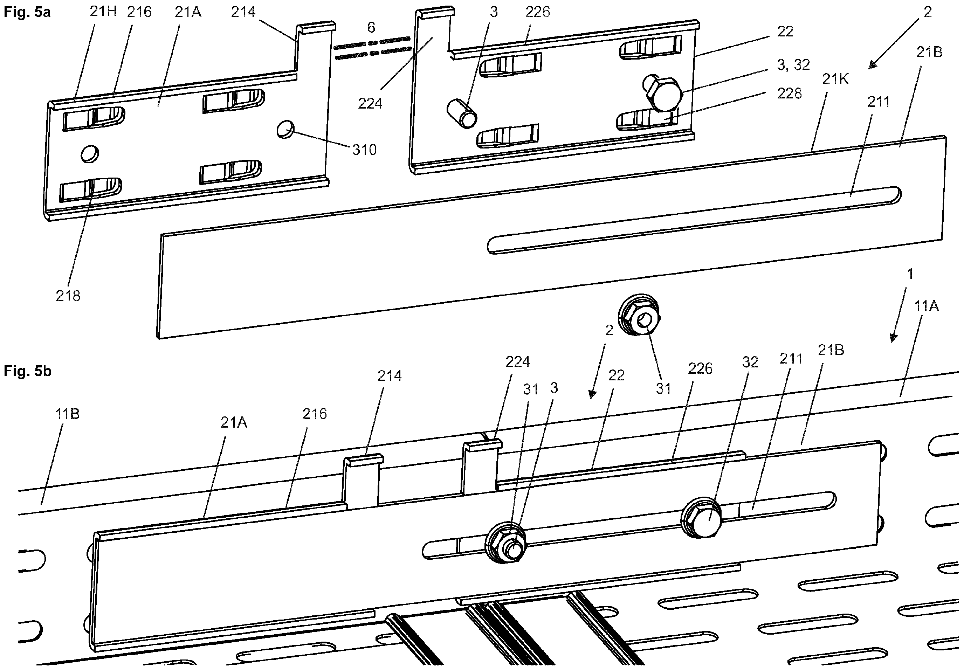

Fig. 5a zeigt eine Verbindungsvorrichtung 2 in einer weiteren vorzugsweisen Ausgestaltung mit einem ersten Verbindungsteil 21, das eine mit den ersten Haken 218 versehene erste Funktionsplatte 21A, die das Haltesegment 21H bildet, und eine zweite Funktionsplatten 21B, die das Kopplungssegment 21K bildet, mit einem Längsschlitz 211 umfasst, durch den zwei Gewindestangen 3 hindurch führbar sind. Die Gewindestangen 3 sind exemplarisch in zwei verschiedenen Ausgestaltungen gezeigt. Die Gewindestange 3 links ist in die zweite Verbindungsplatte 22 eingesetzt und mit einer Schraubenmutter 31 verbindbar. Die Gewindestange 3 rechts ist als Schaft einer Schraube ausgebildet, die einen Schraubenkopf 32 aufweist, der mittels eines Werkzeugs erfasst und gedreht werden kann.

Die erste Funktionsplatte 21A und die zweite Verbindungsplatte 22 sind mit 2 Reihen von gegeneinander gerichteten Haken 218, 228, mit Bedienelementen 214, 224, mittels denen die Verbindungsvorrichtung 2 betätigt werden kann, und beidseitig mit Führungsflanschen 216, 226 versehen, mit denen sie vor der Arretierung entlang der zweiten Funktionsplatte 21B axial verschiebbar sind. Die erste Funktionsplatte 21A weist Gewindebohrungen 30 auf, in die wahlweise Gewindebolzen oder eine Gewindestangen 3 einsetzbar sind. Durch das Eindrehen von Gewindebolzen können die beiden Funktionsplatten 21A, 21B gegenseitig verspannt bzw. fixiert werden, wodurch das erste Verbindungsteil 21 realisiert wird. Die Fixierung der zweiten Funktionsplatte 21B gegenüber der zweitenn Verbindungsplatte 22 erfolgt hingegen durch eine Gewindestangen 3 mit einer Schraubenmutter 31 und durch eine Gewindestange 3 mit einem Schraubenkopf 32. Die beiden Gewindestangen 3 können daher optional in das erste oder zweite Verbindungsteil 21, 22 eingesetzt und durch eine Längsöffnung 221, 211 im zweiten bzw. ersten Verbindungsteil 22, 21 hindurch geführt sein.

Die Bedienelemente 214, 224 können in beliebigen Ausgestaltungen vorliegen und auch zusätzliche Funktionen, wie eine Rastfunktion übernehmen. Die Bedienelemente 214, 224 können in vorzugsweisen Ausgestaltungen z.B. ineinander einrasten oder Flanschelemente aufweisen, die durch eine Schraubengarnitur miteinander verbunden werden. Symbolisch und mit dem Bezugszeichen 6 sind solche Verbindung bzw. Rastmittel dargestellt.

Fig. 5b zeigt eine Kabelbahn 1 mit einer Verbindungsvorrichtung 2 gemäss Fig. 5a. Es ist ersichtlich, dass in dieser Konfiguration die zweite Verbindungsplatte 22 direkt an der Seitenwand 11A anliegt. Durch Festziehen der Schraubenmuttern 32 und der als Schraube ausgebildeten Gewindestange 3 kann die Verbindungsvorrichtung 2 fixiert werden. Selbstverständlich alternativ können auch zwei als Schrauben ausgebildete Gewindestangen 3 oder zwei Gewindestangen 3 mit Schraubenmuttern 31 verwendet werden.

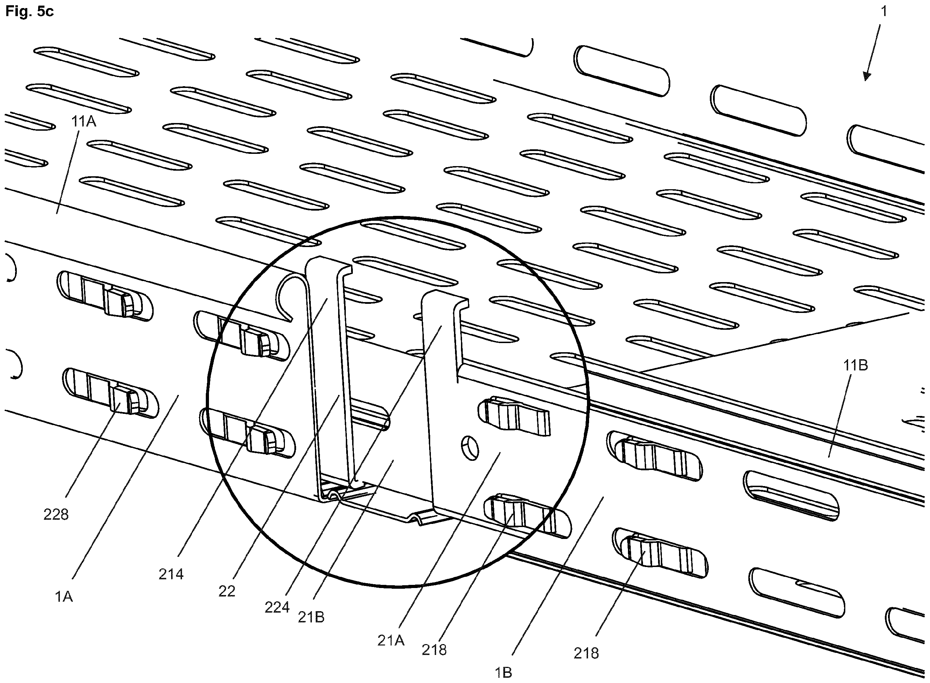

Fig. 5c zeigt die Kabelbahn 1 von Fig. 5b mit einem Kreisschnitt durch die Frontseite des Kabelbahnabschnitts 1B.

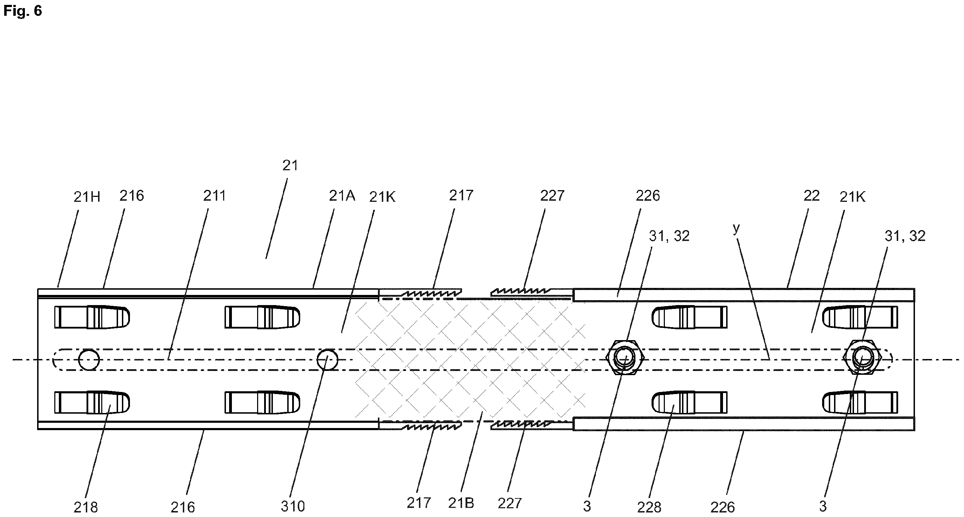

Fig. 6 zeigt die Verbindungsvorrichtung 2 von Fig. 5a in einer weiteren vorzugsweisen Ausgestaltung mit einem ersten Verbindungsteil 21, das eine erste Funktionsplatte 21A, die das Haltesegment 21H bildet, und eine zweite Funktionsplatte 21B aufweist, die das Kopplungssegment 21K bildet und die erste Funktionsplatte 21A und das zweite Verbindungsteil 22 axial verschiebbar hält. Zur axialen Führung entlang der zweiten Funktionsplatte 21B sind die erste Funktionsplatte 21A und das plattenförmige zweite Verbindungsteil 22 an der Unterseite und der Oberseite mit Führungsflanschen 216, 226 versehen, die z.B. durch abgewinkelte Plattenränder gebildet werden. Die Führungsflanschen 226 des zweiten Verbindungsteils 22 können weiter umgebogen sein, sodass sie das plattenförmige erste Verbindungsteil 21 umklammern, wie dies in Fig. 6 gezeigt ist. Führungsflanschen für die gegenseitige Umklammerung des ersten und zweiten Verbindungsteils 21, 22 bzw. des zweiten und ersten Verbindungsteils 22, 21 können vorteilhaft in allen Ausgestaltungen der Erfindung vorgesehen sein. Anstelle eines durchgehenden Flansches können vorteilhaft auch umgebogene C-förmige Flanschelemente oder Klauen vorgesehen sein.

Die erste Funktionsplatte 21A und das plattenförmige zweite Verbindungsteil 22 weisen gegeneinander gerichtete Rastelemente 217, 227 mit Verzahnungen auf, die in verschiedenen Positionen ineinander einhaken können. Die erste Funktionsplatte 21A und das zweite Verbindungsteil 22 können daher gegeneinander verschoben werden, bis die gehaltenen Kabelbahnabschnitte 1A, 1B stirnseitig aneinander anliegen und von den Rastelementen 217, 227 in dieser Position gehalten werden. Die Rastelemente 217, 227 werden parallel gegeneinander geführt, wodurch die Rastverbindung automatisch entsteht. Da die erste Funktionsplatte 21A und das zweite Verbindungsteil 22 axial zueinander ausgerichtet sind, bleibt die Rastverbindung der Rastelemente 217, 227 erhalten, bis diese mittels eines Werkzeugs voneinander gelöst werden oder bis die zweite Funktionsplatte 21B gelöst und die axiale Ausrichtung der ersten Funktionsplatte 21A und des zweiten Verbindungsteils 22 aufgehoben wird.

Die erste Funktionsplatte 21A kann mittels Gewindebolzen oder entlang der verlängerten Längsöffnung 211 mit Gewindestangen 3 und Schraubenmuttern 31 bzw. mit Gewindestangen 3 in der Ausgestaltung von Schrauben mit einem Schraubenkopf 32 in einer wählbaren Position mit der zweiten Funktionsplatte 21B verspannt, arretiert oder verbunden werden, sodass wiederum in Kombination das erste Verbindungsteil 21 resultiert.

Die symbolisch gezeigten Rastelemente können einseitig und/oder beidseitig, unten und/oder oben in beliebigen Ausführungen vorgesehen werden.

## Patentansprüche

1. Vorrichtung (2) zum mechanischen Verbinden und zum elektrischen Kontaktieren benachbarter erster und zweiter Kabelbahnabschnitte (1A, 1B), die je wenigstens ein erstes bzw. zweites Bodenelement (12) und beidseits daran anschliessende mit Wandöffnungen (111) versehene erste bzw. zweite Seitenwände (11A, 11B) umfassen und die nach deren Verbindung koaxial zu einer gemeinsamen Bahnachse (x) ausgerichtet eine Kabelbahn (1) bilden, mit einem mit ersten Haken (218) versehenen ersten Verbindungsteil (21) und einem mit zweiten Haken (228) versehenen zweiten Verbindungsteil (22), die miteinander koppelbar und mit den gegeneinander gerichteten ersten und zweiten Haken (218; 228) in Wandöffnungen (111) benachbarter erster und zweiter Seitenwände (11A, 11B) einsetzbar sind, **dadurch gekennzeichnet, dass** das erste Verbindungsteil (21) ein mit den ersten Haken (218) versehenes Haltesegment (21H) und ein Kopplungssegment (21K) aufweist, das mittels wenigstens einer Gewindestange (3) mit dem zweiten Verbindungsteil (22) verschiebbar und arretierbar verbunden ist, wobei die Gewindestange (3) entweder in das erste Verbindungsteil (21) eingesetzt und durch eine zumindest annähernd parallel zur Bahnachse (x) verlaufende Längsöffnung (221) im zweiten Verbindungsteil (22) hindurch geführt oder in das zweite Verbindungsteil (22) eingesetzt und durch eine zumindest annähernd parallel zur Bahnachse (x) verlaufende Längsöffnung (211) im ersten Verbindungsteil (21) hindurch geführt ist.

2. Verbindungsvorrichtung (2) nach Anspruch 1, **dadurch gekennzeichnet, dass** die Gewindestange (3) in das erste Verbindungsteil (21) eingesetzt oder eingedreht und mit einer Schraubenmutter (31) versehenen ist oder dass die die Gewindestange (3) in das erste Verbindungsteil (21) eindrehbar und mit einem Schraubenkopf (32) versehen ist.

3. Verbindungsvorrichtung (2) nach Anspruch 1 oder 2, **dadurch gekennzeichnet, dass** das vorzugsweise plattenförmige erste Verbindungsteil (21) und das vorzugsweise plattenförmige zweite Verbindungsteil (22) kraftschlüssig und/oder formschlüssig miteinander verbindbar sind und zur formschlüssigen Verbindung zueinander korrespondierende erste und zweite Formelemente oder Führungselemente oder Kopplungssegmente (215, 225; 217, 227; 216, 226) aufweisen.

4. Verbindungsvorrichtung (2) nach Anspruch 1, 2 oder 3, **dadurch gekennzeichnet, dass** das erste oder das zweite Verbindungsteil (21, 22) kraftschlüssig und/oder formschlüssig mit der anliegenden Seitenwand (11A; 11B) verbindbar ist und zur formschlüssigen Verbindung mit der anliegenden Seitenwand (11A; 11B) Formelemente (215, 225) aufweist, die zu Formelementen (115) korrespondieren, die an der anliegenden Seitenwand (11A; 11B) vorgesehen sind.

5. Verbindungsvorrichtung (2) nach einem der Ansprüche 1-4, **dadurch gekennzeichnet, dass** das erste und/oder das zweite Verbindungsteil (21, 22) Bedienelemente (214, 224) aufweisen, die manuell oder mittels eines Werkzeugs erfasst werden können, um das erste und/oder das zweite Verbindungsteil (21, 22) zu verschieben.

6. Verbindungsvorrichtung (2) nach einem der Ansprüche 1-5, **dadurch gekennzeichnet, dass** das Haltesegment (21H) des ersten Verbindungsteils (21) einen Aufnahmeschlitz (213) aufweist, durch den hindurch die zweiten Haken (228) des zweiten Verbindungsteils (22) hindurch führbar sind.

7. Verbindungsvorrichtung (2) nach einem der Ansprüche 1-6, **dadurch gekennzeichnet, dass** das erste Verbindungsteil (21) eine oder mehrere Durchtrittsöffnungen (2180) aufweist, durch die die ersten Haken (218) hindurch geführt sind.

8. Verbindungsvorrichtung (2) nach einem der Ansprüche 1-7, **dadurch gekennzeichnet, dass** das das erste Verbindungsteil (21) gegebenenfalls mehrere Flanschelemente aufweist, die das zweite Verbindungsteil (22) vorzugsweise auf beiden Seiten umklammern und/oder dass das zweite Verbindungsteil (22) gegebenenfalls mehrere Flanschelemente (226) aufweist, die das erste Verbindungsteil (21) vorzugsweise auf beiden Seiten umklammern.

9. Verbindungsvorrichtung (2) nach einem der Ansprüche 1-8, **dadurch gekennzeichnet, dass** das erste Verbindungsteil (21) eine mit den ersten Haken (218) versehene erste Funktionsplatte (21A) und eine mit der Gewindestange (3) versehene oder verschraubbare zweite Funktionsplatte (21B) umfasst, die kraftschlüssig und/oder formschlüssig, gegebenenfalls durch Formelemente oder Flanschelemente, fest oder verschiebbar miteinander verbindbar oder verbunden sind.

10. Verbindungsvorrichtung (2) nach Anspruch 9, **dadurch gekennzeichnet, dass** die mit den ersten Haken (218) versehene erste Funktionsplatte (21A) und das mit den zweiten Haken (228) versehene zweite Verbindungsteil (22) von der zweiten Funktionsplatte (21B) axial gegeneinander verschiebbar gehalten und durch Kopplungssegmente (217, 227) miteinander verbindbar, gegebenenfalls verrastbar sind.

11. Verbindungsvorrichtung (2) nach einem der Ansprüche 1-10, **dadurch gekennzeichnet, dass** das zweite Verbindungsteil (22) angrenzend an die Längsöffnung (221) Arretierelemente (220) aufweist, mittels denen die festgezogene Schraubenmutter (31) oder der Schraubenkopf (32) oder eine damit gehaltene Arretierplatte (33) fixierbar ist.

12. Verbindungsvorrichtung (2) nach einem der Ansprüche 1-11, **dadurch gekennzeichnet, dass** die ersten Haken (218) aus dem plattenförmigen ersten Verbindungsteil (21), gegebenenfalls der ersten Funktionsplatte (21A) und dass die zweiten Haken (228) aus dem plattenförmigen zweiten Verbindungsteil (22) ausgeschnitten und ausgebogen sind.

13. Kabelbahn (1) mit wenigstens zwei koaxial zu einer gemeinsamen Bahnachse (x) ausgerichteten Kabelbahnabschnitten (1A, 1B), die wenigstens ein Bodenelement (12; 121) und beidseits daran anschliessende erste und zweite Seitenwände (11) umfassen, und die paarweise je durch eine Verbindungsvorrichtung (2) nach einem der Ansprüche 1 - 12 miteinander verbundene sind.

14. Kabelbahn (1) nach Anspruch 13, **dadurch gekennzeichnet, dass** die Verbindungsvorrichtungen (2) an der Innenseite oder der Aussenseite der Seitenwände (11) der Kabelbahn (1) montiert sind.

15. Kabelbahn (1) nach Anspruch 13 oder 14, **dadurch gekennzeichnet, dass** die Seitenwände (1A, 1B) der Kabelbahnsegmente (1A, 1B) Formelemente (115) aufweisen, mittels denen die Verbindungsvorrichtungen (2) arretierbar sind.
